(19) Europäisches Patentamt
European Patent Office
Office européen des brevets

(11) **EP 4 428 570 A1**

(12) **EUROPEAN PATENT APPLICATION**
published in accordance with Art. 153(4) EPC

(43) Date of publication:
**11.09.2024 Bulletin 2024/37**

(21) Application number: **22887228.9**

(22) Date of filing: **31.10.2022**

(51) International Patent Classification (IPC):
*G01S 7/497* (2006.01)      *G01S 17/894* (2020.01)

(52) Cooperative Patent Classification (CPC):
**G01S 7/497; G01S 17/894**

(86) International application number:
**PCT/JP2022/040809**

(87) International publication number:
**WO 2023/074903 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2021   JP 2021178893**

(71) Applicant: **KOITO MANUFACTURING CO., LTD.
Minato-ku
Tokyo 108-8711 (JP)**

(72) Inventor: **WAMA Takenori
Shizuoka-shi, Shizuoka 424-8764 (JP)**

(74) Representative: **Hoffmann Eitle
Patent- und Rechtsanwälte PartmbB
Arabellastraße 30
81925 München (DE)**

(54) **SENSING SYSTEM AND AUTOMOBILE**

(57)     A sensing system 400 includes an illumination device 410, an image sensor 420, a sensing controller 430, and an arithmetic processing device 440. The arithmetic processing device 440 receives image data generated by the image sensor 420, determines whether detection of an object is successful for each frame, and generates a stop flag STOP indicating that sensing is impossible based on a result of determination.

FIG.1

EP 4 428 570 A1

## Description

TECHNICAL FIELD

The present disclosure relates to a sensing system for an automobile.

BACKGROUND ART

An object identification system that senses a position and a type of an object around a vehicle is used for automatic driving or automatic control of a light distribution of a headlamp. The object identification system includes a sensor and an arithmetic processing device that analyzes an output of the sensor. The sensor is selected from a camera, a light detection and ranging or laser imaging detection and ranging (LiDAR), a millimeter-wave radar, an ultrasonic sonar, and the like, considering use, required accuracy, and cost.

The sensor includes a passive sensor and an active sensor. The passive sensor detects light emitted by an object or light reflected by an object from environmental light, and the sensor itself does not emit light. On the other hand, the active sensor irradiates an object with illumination light and detects reflected light thereof. The active sensor mainly includes a light projector (illuminator) that irradiates an object with light and a light sensor that detects reflected light from the object. The active sensor has an advantage of being able to increase resistance to disturbances over the passive sensor by matching a wavelength of the illumination light and a sensitivity wavelength range of the sensor.

SUMMARY OF INVENTION

TECHNICAL PROBLEM

When an active sensor is used as a vehicle-mounted sensor, there is a possibility of falling into a situation where sensing is impossible due to the effects of gusty rain, thick fog, or the like. Therefore, a function to determine whether sensing by the active sensor is functioning normally is desired. For example, it is considered a method of monitoring whether the weather is bad using a raindrop sensor, a fog sensor, or the like, and estimating that the active sensor is in a sensing disabled state when the weather is bad. However, this method requires a separate sensor, which increases the cost.

The present disclosure has been made in view of the related problems, and one of the exemplary purposes of one aspect thereof is to provide a technology for detecting a functional limit of an active sensor.

SOLUTION TO PROBLEM

A sensing system of one aspect of the present disclosure includes an illumination device configured to irradiate a field of view with illumination light, an image sensor configured to capture reflected light by an object from the illumination light, and an arithmetic processing device configured to detect the object based on an output of the image sensor. The arithmetic processing device is configured to determine whether detection of the object is successful for each frame and to generate a stop flag indicating that sensing is impossible based on a result of the determination.

Note that optional combinations of the constituent elements described above and mutual substitutions of constituent elements or expressions among methods, apparatuses, systems or the like are also valid as aspects of the present invention or present disclosure. Furthermore, the description of this item (SUMMARY OF INVENTION) does not describe all the indispensable features of the present invention, and therefore, the subcombinations of these features described can also be the present invention.

ADVANTAGEOUS EFFECTS OF INVENTION

According to one aspect of the present disclosure, it is possible to detect a functional limit of sensing.

BRIEF DESCRIPTION OF DRAWINGS

FIG. 1 is a block diagram of a sensing system according to an embodiment.
FIG. 2 is a view illustrating whether detection of an object is successful.
FIG. 3 is a time chart showing an operation of the sensing system of FIG. 1.
FIG. 4 is a block diagram of a time of flight (ToF) camera according to one embodiment.
FIG. 5 is a view illustrating an operation of the ToF camera.
FIGS. 6A and 6B are views illustrating images obtained by the ToF camera.
FIG. 7 is a view showing a vehicle lamp with a built-in sensing system.
FIG. 8 is a block diagram showing a vehicle lamp including an object identification system.

DESCRIPTION OF EMBODIMENTS

<Outline of Embodiments>

An outline of several exemplary embodiments of the present disclosure will be described. The outline is a simplified explanation regarding several concepts of one or multiple embodiments as an introduction to the detailed description described below in order to provide a basic understanding of the embodiments, and is by no means intended to limit the scope of the present invention or disclosure. Furthermore, the outline is by no means a comprehensive outline of all conceivable embodiments, and does not limit the essential components of the embodiments. For convenience, in some cases, "one embodiment" as used herein refers to a single embodiment (embodiment or modified variation) or a plurality of embodiments (embodiments or variations) disclosed in the present specification.

A sensing system according to one embodiment includes an illumination device configured to irradiate a field of view with illumination light, an image sensor configured to capture reflected light by an object from the illumination light, and an arithmetic processing device configured to detect the object based on an output of the image sensor. The arithmetic processing device is configured to determine whether detection of the object is successful for each frame and to generate a stop flag indicating that sensing is impossible based on a result of the determination.

According to this configuration, it is possible to determine a sensing disabled state (also referred to as 'functional limit') based on a result of the determination as to whether the detection of an object is successful.

In one embodiment, the arithmetic processing device may assert the stop flag when failure of the detection of an object continues for a predetermined time or a predetermined number of frames.

In one embodiment, while the stop flag is asserted, the illumination device and the image sensor may be configured to continue to operate, and the arithmetic processing device may be configured to negate the stop flag based on a result of the determination as to whether the detection of an object is successful at that time.

In one embodiment, the arithmetic processing device may negate the stop flag when success of the detection of an object continues for a predetermined time or a predetermined number of frames.

In one embodiment, operating frequencies of the illumination device and the image sensor for a period during which the stop flag is asserted may be lowered than the frequencies for a period during which the stop flag is negated.

In one embodiment, the illumination device and the image sensor may be configured to operate as a time of flight (ToF) camera configured to divide a field of view into a plurality of ranges with respect to a depth direction and to change a time difference between light emission and imaging for each range, making it possible to obtain a plurality of images corresponding to the plurality of ranges.

An automobile according to one embodiment may include the sensing system described above and an upper-level controller configured to perform control based on an output of the sensing system. The upper-level controller may be configured to stop the control while a flag indicating that sensing is impossible is set.

In one embodiment, the illumination device and the image sensor may be a time of flight (TOF) camera.

In one embodiment, the illumination device and the image sensor may be a light detection and ranging, laser imaging detection and ranging (LIDAR).

(Embodiments)

Hereinafter, favorable embodiments will be described with reference to the drawings. The same or equivalent components, members and processing shown in each drawing are denoted with the same reference numerals, and repeated descriptions will be omitted appropriately. Furthermore, the embodiments are illustrative, not limiting the disclosure, and all features or combinations thereof described in the embodiments are not necessarily essential to the invention.

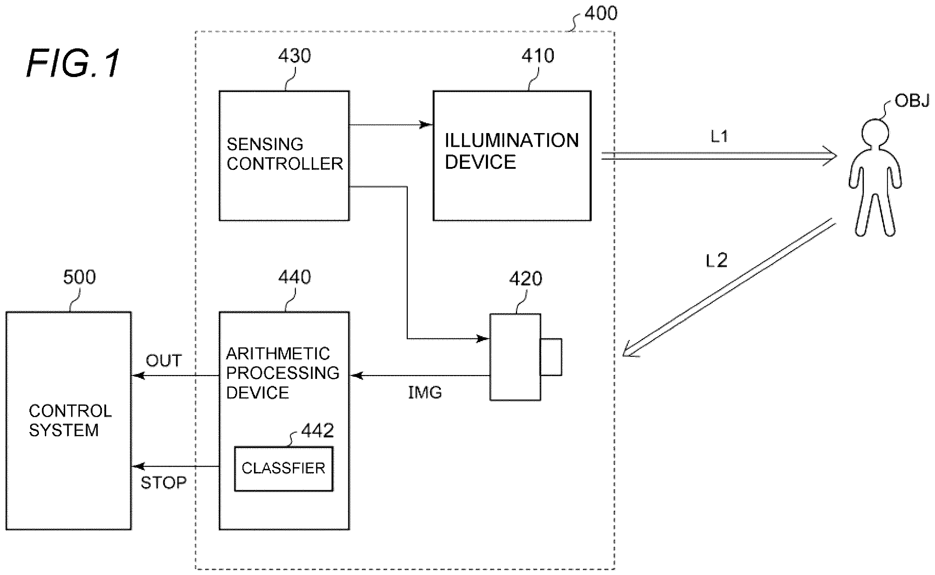

FIG. 1 is a block diagram of a sensing system 400 according to an embodiment. The sensing system 400 is an active sensor such as a ToF camera, a LIDAR, or the like, and includes an illumination device 410, an image sensor 420, a sensing controller 430, and an arithmetic processing device 440.

The illumination device 410 includes a semiconductor light-emitting element such as a laser diode or a light-emitting diode (LED), and irradiates a field of view with illumination light L1. A wavelength of the illumination light L1 is not particularly limited, and the illumination light may be infrared light, visible light, or white light.

The image sensor 420 has sensitivity to the same wavelength as the illumination light L1. The light sensor 420 receives reflected light L2 by an object OBJ within a sensing range (field of view) of the sensing system 400 from the illumination light L1 and generates image data IMG.

The sensing controller 430 integrally controls the sensing system 400. Specifically, light emission from the illumination device 110 and sensing by the image sensor 420 are synchronously controlled.

The arithmetic processing device 440 processes the image data IMG generated by the image sensor 420 and detects an object present in the field of view. The arithmetic processing device 440 may include a classifier (identifier) 442 including a learned model generated by machine learning.

An output OUT of the arithmetic processing device 440 is supplied to a control system 500, which is an upper-level controller. The control system 500 is an application, and is for example, an automatic driving system, a driving assistance system, an automatic light distribution control system for headlamps, or the like. The output OUT of the arithmetic processing device 440 is an output of the classifier 442 and may include, for example, a type of object and a location of object. The output OUT of the arithmetic processing device 440 may include the image data IMG. The control system 500 performs processing corresponding to its function based on an output of the sensing system 400.

The arithmetic processing device 440 determines whether detection of the object OBJ is successful for each frame of the image data IMG. Then, based on a result of the determination, a stop flag STOP is generated. The stop flag STOP is asserted when sensing is impossible, that is, when the sensing system 400 has reached its functional limit. The sensing system 400 asserts the stop flag STOP and stops the output OUT.

When the stop flag STOP is asserted, the control system 500 determines that the sensing system 400 has reached its functional limit and stops processing.

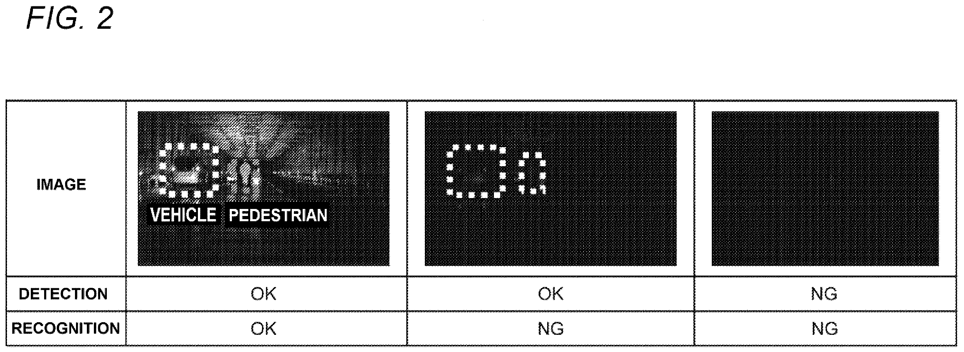

FIG. 2 is a view illustrating whether detection of an object is successful. Successful detection of an object OBJ means that, when an object is present in the field of view, the presence of the object can be detected based on the image data IMG.

When the arithmetic processing device 440 includes a classifier (identifier), there is a determination as to whether recognition is successful, in addition to whether detection is successful. Successful recognition means being able to determine a type of object (a category such as a pedestrian, a car, and the like). As for three images shown in FIG. 2, the left image has a high quality, and the right image has a low quality. In the case of high quality, both detection and recognition are likely to succeed, and in the case of low quality, both detection and recognition are likely to fail. In the case of medium image quality, a situation may arise where detection succeeds but recognition fails.

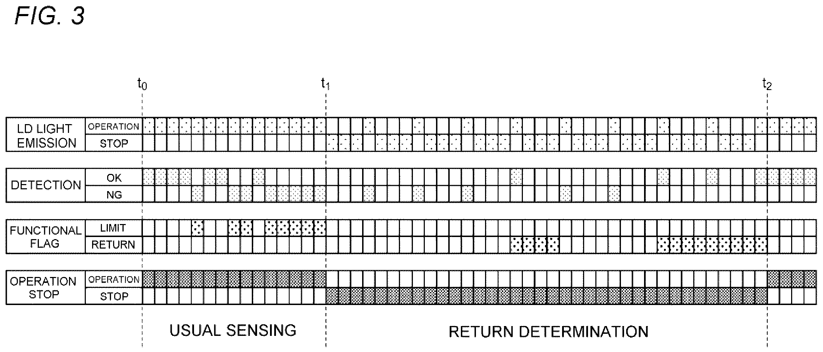

The above is the configuration of the sensing system 400. Subsequently, operations thereof will be described. FIG. 3 is a time chart showing an operation of the sensing system 400 of FIG. 1. The time chart is divided into a plurality of time slots. One slot corresponds to one sensing. During time to to time ti, usual sensing is performed, the illumination device 410 emits light for each slot, and image data is generated for each slot. Focusing on the period of $t_0$ to $t_1$, as time passes, the number of slots in which detection fails increases.

As described with reference to FIG. 2, the main cause of detection failure is a decrease in the image quality of image data. The image quality of image data obtained by the image sensor 420 is highly affected by the weather. That is, in gusty rain or thick fog, the attenuation of illumination light and reflected light increases, so the image becomes dark. In addition, when the illumination device 410 or the image sensor 420 is accommodated in a headlamp, the image quality deteriorates depending on an amount of water droplets adhering to a cover glass or an amount of water flowing on the cover glass. When the image sensor 420 is arranged on an inner side of a front glass, the image quality may deteriorate due to water droplets adhering to the front glass or water flowing on the front glass.

As an example of severe weather, rain is described. On the front of the image sensor 420, there is a cover glass or front glass. In light rain, the image quality hardly deteriorates, but as the rain becomes heavier, the amount of water droplets adhering to the glass or the amount of water flowing on the glass increases, so the image quality deteriorates. When sensing is repeatedly performed while the vehicle is driving, a probability of object detection success is high if the weather is good, and a probability of object detection failure increases as the weather becomes worse. The probability of object detection failure can be understood as a probability of appearance of a slot during which object detection fails.

That is, it can be said that there is a correlation between good or bad weather and the number of slots during which detection fails, and as the weather becomes worse, the number of slots during which detection fails increases.

A functional flag is an internal signal referenced for controlling the stop flag STOP. In this example, the functional flag includes two flags. One is a functional limit flag, which is referenced to determine a condition for assert of the stop flag STOP while the stop flag STOP is negated. The functional limit flag is asserted when a flag as to whether detection is successful indicates failure (NG). The functional limit flag may be understood as a flag indicating a state of a counter that counts up for each slot.

The arithmetic processing device 440 asserts the stop flag STOP on the condition that the slot (frame) of detection failure continues for a predetermined number of times. In this example, if detection fails for 5 consecutive slots, the stop flag STOP is asserted. For example, the arithmetic processing device 440 continues to monitor the functional limit flag of the functional flag, and asserts the stop flag STOP when assert continues for 5 frames.

When the sensing system 400 reaches the functional limit at time ti, the processing of the control system 500 stops. However, the sensing system 400 continues sensing even after the sensing system 400 reaches the functional limit. The sensing at this time is for determining whether the function of the sensing system 400 has been restored (return determination), and is not used for control by the control system 500, so high-speed sensing is unnecessary. Therefore, a slot interval of sensing for return determination becomes wider than when the sensing system 400 is normal. That is, a sensing frequency can be lowered, whereby power consumption can be reduced. In the example of FIG. 3, the illumination device 410 emits light once per 4 slots, whereby sensing is performed.

During a return determination period in which the stop flag STOP is asserted, the arithmetic processing device 440 processes the generated image data once per several slots (for example, once per 4 slots) and determines whether detection of an object is successful. Then, based on a result of the determination, the stop flag STOP is negated.

The functional flag includes a return flag. The return flag is asserted when object detection is successful and negated when object detection fails, in the return determination period. The arithmetic processing device 440 negates the stop flag STOP if the assert of the return flag continues over a predetermined number of slots. In the example of FIG 3, if the stop flag STOP continues for 9 slots, in other words, if object detection is successful in 3 consecutive sensings, the stop flag STOP is negated and usual sensing returns (time $t_2$).

The above is the operation of the sensing system 400. According to the sensing system 400, the sensing system itself can quantitatively determine the functional limit, regardless of external information. Since no additional hardware is required for determining the functional limit and the determination can be implemented simply by changing a software program of the arithmetic processing device 440, the cost increase of the system can also be suppressed.

Variations of the processing of the sensing system 400 will be described.

(Variation 1)

The arithmetic processing device 440 may assert the stop flag STOP when failure of detection of an object continues for a predetermined time during a normal sensing period. Similarly, the arithmetic processing device 440 may negate the stop flag STOP when successful detection of an object continues for a predetermined time during the return determination period.

(Variation 2)

The arithmetic processing device 440 may monitor an appearance ratio (success probability or failure probability) of success and failure of detection of an object during the normal sensing period, and may assert the stop flag STOP when a ratio of failure exceeds a threshold. Similarly, the arithmetic processing device 440 may monitor an appearance ratio (success probability or failure probability) of success and failure of detection of an object during the return determination period, and may negate the stop flag STOP when a ratio of failure exceeds a threshold (or when a ratio of success exceeds a threshold).

Subsequently, the use of the sensing system 400 will be described. One embodiment of the sensing system 400 is a ToF camera.

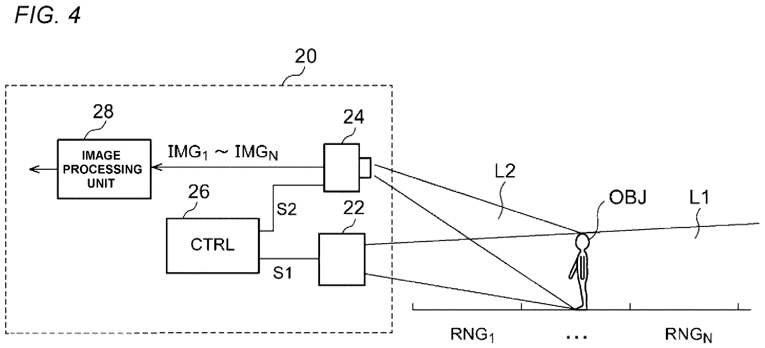

FIG. 4 is a block diagram of a ToF camera 20 according to one embodiment. The ToF camera 20 divides a field of view into N ranges $RNG_1$ to $RNG_{rr}$ ($N \geq 2$) with respect to a depth direction, and performs imaging.

The ToF camera 20 includes an illumination device 22, an image sensor 24, a controller 26, and an image processing unit 28. The illumination device 22 corresponds to the illumination device 410 of FIG. 1, the image sensor 24 corresponds to the image sensor 420 of FIG. 1, and the controller 26 corresponds to the sensing controller 430 of FIG. 1.

The illumination device 22 irradiates the front of the vehicle with pulsed illumination light L1 in synchronization with a light emission timing signal S1 provided from the controller 26. The illumination light L1 is preferably infrared light, but is not limited thereto, and may be visible light having a predetermined wavelength.

The image sensor 24 is configured to be able to perform exposure control in synchronization with an imaging timing signal S2 provided from the controller 26 and to generate a range image IMG. The image sensor 24 has sensitivity to the same wavelength as the illumination light L1 and captures the reflected light (return light) L2 reflected by the object OBJ.

The controller 26 maintains predetermined light emission timing and exposure timing for each range RNG. When imaging any range $RNG_i$, the controller 26 generates a light emission timing signal S1 and an imaging timing signal S2 on the basis of the light emission timing and exposure timing corresponding to the range and performs the imaging. The ToF camera 20 can generate a plurality of range images $IMG_1$ to $IMG_N$ corresponding to the plurality of ranges $RNG_1$ to $RNG_N$. In an i-th range image $IMG_i$, an object included in the corresponding range $RNG_i$ appears.

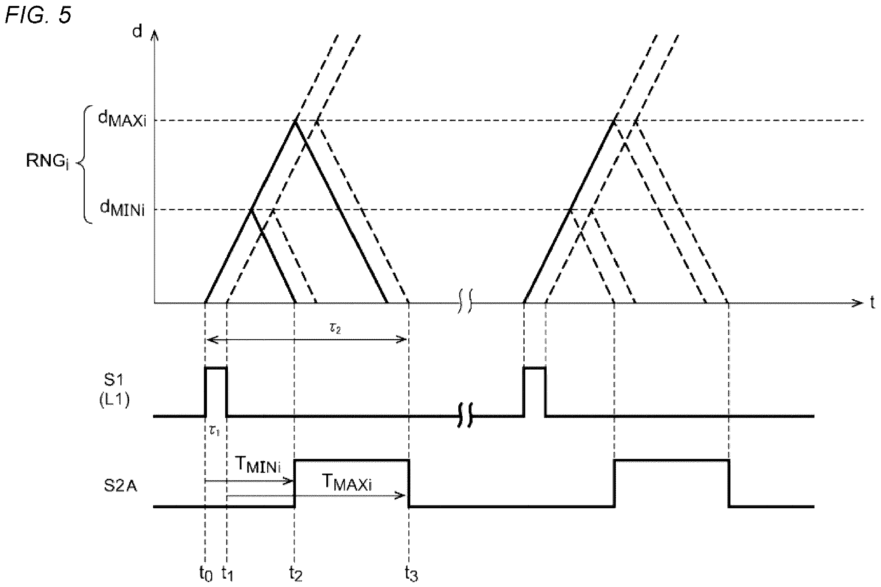

FIG. 5 is a view illustrating an operation of the ToF camera 20. FIG. 5 shows an aspect when measuring the i-th range $RNG_i$. The illumination device 22 emits light during a light emission period $\tau_1$ between time to and time $t_1$ in synchronization with the light emission timing signal S1. At the top, a diagram of a light beam where a time is indicated on the horizontal axis and a distance is indicated on the vertical axis is shown. A distance from the ToF camera 20 to a front side boundary of the range $RNG_i$ is set to $d_{MINi}$ and a distance from the ToF camera to a deep side boundary of the range $RNG_i$ is set to $d_{MAXi}$.

Round-trip time $T_{MINi}$ from when light emitted from the illumination device 22 at a certain time point reaches the distance $d_{MINi}$ to when reflected light returns to the image sensor 24 is expressed as

$$T_{MINi}=2\times d_{MINi}/c,$$

in which c is the speed of light.

Similarly, round-trip time $T_{MAXi}$ from when light emitted from the illumination device 22 at a certain time point reaches the distance $d_{MAXi}$ to when reflected light returns to the image sensor 24 is expressed as $T_{MAXi}=2\times d_{MAXi}/c$.

When it is desired to image the object OBJ included in the range $RNG_i$, the controller 26 generates the imaging timing signal S2 so that the exposure starts at a time point $t_2 = t_0 + T_{MINi}$ and ends at a time point $t_3 = t_1 + T_{MAXi}$. This is one exposure operation.

When imaging the i-th range $RNG_i$, the light emission and the exposure are repeatedly performed multiple times, and measurement results are integrated by the image sensor 24.

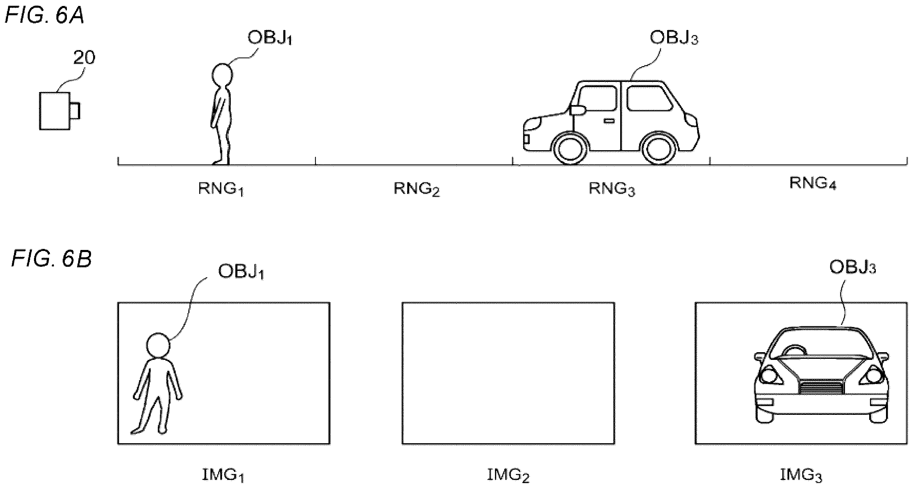

FIGS. 6A and 6B are views illustrating images obtained by the ToF camera 20. In an example of FIG. 6A, an object (pedestrian) $OBJ_1$ is present in the range $RNG_1$ and an object (vehicle) $OBJ_3$ is present in the range $RNG_3$. FIG. 6B shows a plurality of range images $IMG_1$

to $IMG_3$ obtained in the situation of FIG. 6A. When capturing the range image $IMG_1$, an object image $OBJ_1$ of the pedestrian $OBJ_1$ appears in the range image $IMG_1$ because the image sensor is exposed only to reflected light from the range $RNG_1$.

When capturing the range image $IMG_2$, no object image appears in the range image $IMG_2$ because the image sensor is exposed to reflected light from the range $RNG_2$.

Similarly, when capturing the range image $IMG_3$, only the object image $OBJ_3$ appears in the range image $IMG_3$ because the image sensor is exposed to reflected light from the range $RNG_3$. In this way, an object can be separately captured for each range by the ToF camera 20.

The above is the operation of the ToF camera 20.

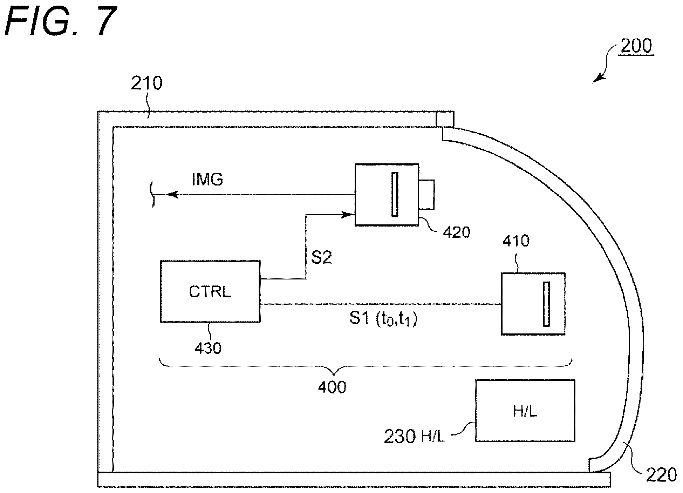

FIG. 7 is a view showing a vehicle lamp 200 with a built-in sensing system 400. The vehicle lamp 200 includes a housing 210, an outer lens 220, lamp units 230H/230L for high beam and low beam, and a sensing system 400. The lamp units 230H/230L and the sensing system 400 are accommodated in the housing 210.

Note that a part of the sensing system 400, for example, the image sensor or the arithmetic processing device 440 may be installed outside the vehicle lamp 200, for example, behind a room mirror.

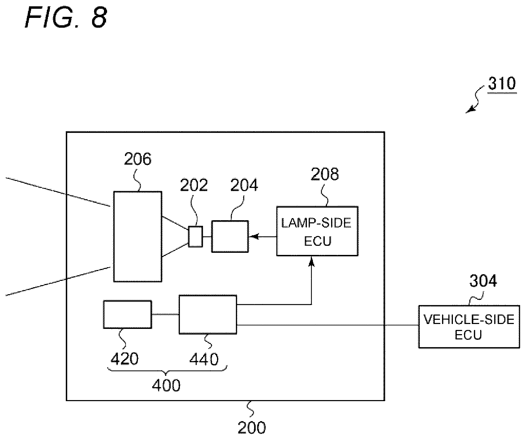

FIG. 8 is a block diagram showing a vehicle lamp 200 including the sensing system 400. The vehicle lamp 200 configures a lamp system 310 together with a vehicle-side ECU 304. The vehicle lamp 200 includes a light source 202, a lighting circuit 204, and an optical system 206. Further, the vehicle lamp 200 includes the sensing system 400. The sensing system 400 includes the image sensor 420 and the arithmetic processing device 440.

The arithmetic processing device 440 is configured to be able to identify a type of object based on an image obtained by the sensing system 400.

The arithmetic processing device 440 may be implemented by a combination of a processor (hardware) such as a central processing unit (CPU), a micro processing unit (MPU) and a microcomputer and a software program executed by the processor (hardware). The arithmetic processing device 440 may be a combination of a plurality of processors. Alternatively, the arithmetic processing device 440 may be configured by only hardware.

Information about the object OBJ detected by the arithmetic processing device 440 may be used for light distribution control of the vehicle lamp 200. Specifically, a lamp-side ECU 208 generates a proper light distribution pattern based on the basis of information about a type and a position of the object OBJ generated by the arithmetic processing device 440. The lighting circuit 204 and the optical system 206 operate so that the light distribution pattern generated by the lamp-side ECU 208 is obtained.

Furthermore, the information about the object OBJ detected by the arithmetic processing device 440 may be transmitted to the vehicle-side ECU 304. The vehicle-side ECU may perform automatic driving on the basis of the information.

It is understood by one skilled in the art that the above-described embodiments are illustrative and various variations can be made to combinations of each component or each processing process. In the below, such variations will be described.

(Variation 1)

The sensing system 400 is not limited to the ToF camera, and may be a light detection and ranging, laser imaging detection and ranging (LiDAR). Alternatively, the sensing system 400 may be a single pixel imaging device (quantum radar) using correlation calculation.

(Variation 2)

In the embodiment, the arithmetic processing device 440 generates the stop flag indicating a functional limit. However, the arithmetic processing device 440 may generate an index having a correlation with the ratio of success and failure of detection of an object and output the index to the control system 500. For example, the control system 500 may estimate a degree of bad weather based on the index.

(Variation 3)

In the embodiment, the state of the control system 500 is controlled based on the stop flag STOP generated by the sensing system 400. However, the present disclosure is not limited thereto. For example, when the stop flag STOP is asserted, a driver may be notified visually or audibly that the sensing system 400 is dysfunctional.

It should be understood by one skilled in the art that the embodiments are merely illustrative, various variations can be made to combinations of components and processing processes in the embodiments and such variations also fall within the scope of the present invention.

INDUSTRIAL APPLICABILITY

The present disclosure relates to a sensing system for an automobile.

REFERENCE SIGNS LIST

    10: object identification system
    OBJ: object
    20: ToF camera

22: illumination device
24: image sensor
26: controller
S1: light emission timing signal
S2: imaging timing signal
40: arithmetic processing device
200: vehicle lamp
202: light source
204: lighting circuit
206: optical system
310: lamp system
304: vehicle-side ECU
400: sensing system
410: illumination device
420: image sensor
430: sensing controller
440: arithmetic processing device
500: control system

**Claims**

1.  A sensing system comprising:

    an illumination device configured to irradiate a field of view with illumination light;
    an image sensor configured to capture reflected light by an object from the illumination light; and
    an arithmetic processing device configured to detect the object based on an output of the image sensor,
    wherein the arithmetic processing device is configured to determine whether detection of the object is successful for each frame and to generate a stop flag indicating that sensing is impossible based on a result of determination.

2.  The sensing system according to claim 1, wherein the arithmetic processing device asserts the stop flag when failure of the detection of the object continues for a predetermined time or a predetermined number of frames.

3.  The sensing system according to claim 1, wherein the arithmetic processing device is configured to assert the stop flag based on a ratio of failure and success of the detection of the object.

4.  The sensing system according to any one of claims 1 to 3, wherein while the stop flag is asserted, the illumination device and the image sensor are configured to continue to operate, and the arithmetic processing device is configured to negate the stop flag based on a result of the determination as to whether the detection of the object is successful at that time.

5.  The sensing system according to claim 4, wherein the arithmetic processing device negates the stop flag when success of the detection of an object continues for a predetermined time or a predetermined number of frames.

6.  The sensing system according to claim 4, wherein the arithmetic processing device is configured to negate the stop flag based on a ratio of failure and success of the detection of the object.

7.  The sensing system according to any one of claims 4 to 6, wherein operating frequencies of the illumination device and the image sensor for a period during which the stop flag is asserted are lowered than the frequencies for a period during which the stop flag is negated.

8.  A sensing system comprising:

    an illumination device configured to irradiate a field of view with illumination light;
    an image sensor configured to capture reflected light by an object from the illumination light; and
    an arithmetic processing device configured to detect the object based on an output of the image sensor,
    wherein the arithmetic processing device is configured to determine whether detection of the object is successful for each frame and to generate an index having a correlation with a ratio of success and failure.

9.  The sensing system according to any one of claims 1 to 6, wherein the illumination device and the image sensor are configured to operate as a time of flight camera configured to divide the field of view into a plurality of ranges with respect to a depth direction and to change a time difference between light emission and imaging for each range, making it possible to obtain a plurality of images corresponding to the plurality of ranges.

10. An automobile comprising:

    the sensing system according to any one of claims 1 to 6; and
    an upper-level controller configured to perform control based on the output of the sensing system,
    wherein the upper-level controller is configured to stop the control while the stop flag indicating that sensing is impossible is set.

*FIG.1*

EP 4 428 570 A1

## FIG. 2

| IMAGE | | | |
|---|---|---|---|
| DETECTION | OK | OK | NG |
| RECOGNITION | OK | NG | NG |

EP 4 428 570 A1

EP 4 428 570 A1

*FIG. 3*

*FIG. 4*

EP 4 428 570 A1

FIG. 5

*FIG. 6A*

*FIG. 6B*

FIG. 7

EP 4 428 570 A1

FIG. 8

## INTERNATIONAL SEARCH REPORT

| International application No. |
| --- |
| **PCT/JP2022/040809** |

### A. CLASSIFICATION OF SUBJECT MATTER

*G01S 7/497*(2006.01)i; *G01S 17/894*(2020.01)i
FI: G01S7/497; G01S17/894

According to International Patent Classification (IPC) or to both national classification and IPC

### B. FIELDS SEARCHED

Minimum documentation searched (classification system followed by classification symbols)

G01S7/48-7/51; G01S17/00-17/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2020/021914 A1 (PANASONIC INTELLECTUAL PROPERTY MANAGEMENT CO., LTD.) 30 January 2020 (2020-01-30)<br>paragraphs [0012]-[0117] | 1-10 |
| A | WO 2020/115016 A1 (AMS INTERNATIONAL AG) 11 June 2020 (2020-06-11)<br>entire text, all drawings | 1-10 |

☐ Further documents are listed in the continuation of Box C.　　☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **16 November 2022** | **13 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/040809**

| Patent document cited in search report | | | Publication date (day/month/year) | Patent family member(s) | | | Publication date (day/month/year) |
|---|---|---|---|---|---|---|---|
| WO | 2020/021914 | A1 | 30 January 2020 | US 2021/0141090 A1 paragraphs [0010]-[0134] | | | |
| WO | 2020/115016 | A1 | 11 June 2020 | CN 113167901 A entire text, all drawings | | | |

Form PCT/ISA/210 (patent family annex) (January 2015)